(19) Europäisches Patentamt / European Patent Office / Office européen des brevets

(11) **EP 4 119 608 A1**

(12) **EUROPÄISCHE PATENTANMELDUNG**

(43) Veröffentlichungstag:
**18.01.2023 Patentblatt 2023/03**

(21) Anmeldenummer: **22184261.0**

(22) Anmeldetag: **12.07.2022**

(51) Internationale Patentklassifikation (IPC):
***C08K 5/00*** *(2006.01)* ***C08K 5/098*** *(2006.01)*
***C08L 77/06*** *(2006.01)*

(52) Gemeinsame Patentklassifikation (CPC):
(C-Sets verfügbar)
**C08K 5/0041; C08K 5/005; C08K 5/098;**
**C08L 77/06** (Forts.)

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **14.07.2021 CH 0700512021**

(71) Anmelder: **EMS-CHEMIE AG**
**7013 Domat/Ems (CH)**

(72) Erfinder: **Aepli, Etienne**
**7013 Domat/Ems (CH)**

(54) **TRANSPARENTE POLYAMIDE MIT GUTER WITTERUNGSBESTÄNDIGKEIT**

(57) Die Erfindung betrifft eine Polyamid-Formmasse mit guter Witterungsbeständigkeit enthaltend oder bevorzugt bestehend aus den folgenden Komponenten :
85 bis 99.85 Gew.-% einer Komponente A, wobei die Komponente A besteht aus Polyamid A1 oder aus einer Mischung der Polyamide A1 und A2, wobei A1 mindestens ein amorphes oder mikrokristallines Polyamid mit mehr als 60 Mol-% an Monomeren mit ausschliesslich aliphatischen Struktureinheiten, bezogen auf die Gesamtmenge an Monomeren, ist und A2 mindestens ein acyclisch aliphatisches Polyamid ist und wobei die Summe der Komponenten A1 und A2 100 Gew.-% der Komponente A ergibt;
0.05 bis 2.0 Gew.-% mindestens eines Farbmittels B;
0.10 bis 3.0 Gew.-% mindestens eines Stabilisators C;
0 bis 10 Gew.-% Zusatzstoffe D, verschieden von A, B und C;
wobei sich die Gewichtsanteile der Komponenten A bis D auf 100 Gew.-% ergänzen, wobei die Polyamid-Formmasse weder Russ noch Nigrosin umfasst, wobei die Farbhelligkeit L*, bestimmt gemäss DIN EN ISO 11664-4:2020 im CIELAB-Farbraum an einer Platte der Dimension $60 \times 60 \times 2$ mm, höchstens 32 ist und wobei die Polyamide A1 eine Transparenz von mindestens 88% und einen Haze von höchstens 5%, jeweils bestimmt gemäss ASTM-D1003-21 an einer Platte der Dimension $60 \times 60 \times 2$ mm, aufweisen.

EP 4 119 608 A1

**(Forts. nächste Seite)**

(52) Gemeinsame Patentklassifikation (CPC): (Forts.)

C-Sets
**C08K 5/0041, C08L 77/06;**
**C08K 5/005, C08L 77/06;**
**C08K 5/098, C08L 77/06;**
**C08L 77/06, C08K 5/0041, C08K 5/005,**
**C08K 5/098, C08L 77/02**

**Beschreibung**

Die vorliegende Erfindung betrifft schwarz eingefärbte Polyamid-Formmassen auf Basis von transparenten Polyamiden mit guter Witterungsbeständigkeit, daraus hergestellte Formkörper und deren Verwendung.

Aufgrund ihrer sehr guten optischen und mechanischen Kennwerte ist der Einsatz von amorphen oder mikrokristallinen Polyamid-Formmassen für Anwendungen im Bereich von Automobilteilen, Elektronik, optischen Bauteilen, Blenden, Gehäusen, Sichtflächen usw. weit verbreitet.

Bei vielen Anwendungen im technischen Bereich kommen schwarz eingefärbte Formteile zum Einsatz, die im Sichtbereich vorteilhaft eine sogenannte Klavierlackoptik aufweisen, also den Eindruck einer in die Tiefe reichenden Schwärze gepaart mit hohem Glanz vermitteln. Als Farbmittel zur Schwarzeinfärbung wird im Stand der Technik hauptsächlich Russ, insbesondere feinkörniger, sogenannter UV-Russ verwendet.

Stand der Technik

So beschreibt US 5 945 469 eine Polyamid-Zusammensetzung, welche neben Polyamiden und reaktiven Polysiloxanen, gehinderte Amine sowie Phosphite oder Phosphonite enthalten. Die Schwarzeinfärbung der Formmasse erfolgt mittels feinstteiligem Russ, der einen Absorptionskoeffizienten von grösser als 400 aufweist. Derartige Formmassen sollen eine reduzierte Farbänderung nach Bewitterung aufweisen.

US 6 265 472 B1 betrifft füllstoffhaltige Polyamid-Formmassen mit verbesserter Witterungsbeständigkeit, die mittels Russ und Kupferphthalocyanin-Farbstoffen schwarz eingefärbt sind.

JP 2008 266 434 A betrifft schwarz eingefärbte Polyamidformmassen und daraus geformte Artikel, die sich durch Laserschweissen mit geeigneten Substraten verbinden lassen. Das Laserschweissen wird möglich wenn das Farbmittel Russ gegen z.B. ein Gemisch aus Antrachinon- und Perylen-Farbstoffen ersetzt wird. Die Witterungsbeständigkeit dieser laserschweissbaren Formmassen kann allerdings nicht ganz mit den ansonsten identischen, aber Russ als Farbmittel enthaltenden Formmassen des Standes der Technik mithalten.

Auch WO 2017/144276 A1 betrifft das Laserschweissen von rein schwarz eingefärbten Polyamid-Zusammensetzungen. Es werden allerdings keine Angaben zur Witterungsbeständigkeit gemacht.

WO 2012/080398 A2 betrifft mit organischen Farbstoffen eingefärbte, transparente PolymerZusammensetzung auf Basis von Polycarbonat. Ziel ist es eine möglichst farbneutral grau eingefärbte Polycarbonat-Formmasse bereitzustellen, die eine gute Hitze- und Witterungsbeständigkeit aufweist. Dies wird erreicht durch eine spezielle Auswahl und Kombination an organischen Farbstoffen, wobei aber in der Farbmischung stets Russ (Carbon Black) mitverwendet wird.

Somit wird im Stand der Technik keine ohne Verwendung von Russ schwarz eingefärbte Formmasse auf Basis transparenter Polyamide beschrieben, die eine gegenüber den mit Russ eingefärbten Formmassen bessere Witterungsbeständigkeit aufweist.

Die vorliegende Erfindung verfolgt die Aufgabenstellung, eine Polyamid-Formmasse auf Basis von transparenten Polyamiden bereitzustellen, die sich durch eine schwarze Klavierlackoptik auszeichnet. Dabei soll die Polyamid-Formmasse eine Farbhelligkeit L*, bestimmt gemäss DIN EN ISO 11664-4:2020 im CIELAB-Farbraum an einer Platte der Dimension 60 x 60 x 2 mm, von maximal 32, einen hohen Glanz sowie eine gute Witterungsbeständigkeit aufweisen. Insbesondere soll bei Bewitterung der Glanz unter einem Winkel von 60° nur wenig abnehmen und die Farbhelligkeitsdifferenz $\Delta L^*$ sowie der Farbabstand $\Delta E$, bestimmt im Vergleich zur unbewitterten Probe gemäss DIN EN ISO 11664-4:2020 im CIELAB-Farbraum an einer Platte der Dimension 60 x 60 x 2 mm, nur gering ausfallen. Dabei soll die Witterungsbeständigkeit gegenüber Polyamid-Formmassen, bei denen das Färbemittel Russ allein oder in Kombination mit anderen Farbmitteln verwendet wird, deutlich verbessert werden.

Konkret wird bevorzugt, wenn die erfindungsgemässen Polyamid-Formmassen nach 1000 Stunden Bewitterung gemäss DIN EN ISO 4892-2:2013 eine Farbhelligkeitsdifferenz $\Delta L^*$ von höchstens 3, einen Farbabstand $\Delta E$ von höchstens 4 und eine Änderung des Glanzes bei 60° um weniger als 20% aufweisen, wobei als Referenz für die Glanzänderung, $\Delta L^*$ oder $\Delta E$ die nicht bewitterte Probe dient.

Diese Aufgabe wird durch die Polyamid-Formmasse gemäß Anspruch 1 gelöst, welche die folgenden Komponenten enthält oder bevorzugt aus den folgenden Komponenten besteht: 85 bis 99.85 Gew.-% einer Komponente A, wobei die Komponente A besteht aus Polyamid A1 oder aus einer Mischung der Polyamide A1 und A2, wobei

A1 mindestens ein amorphes oder mikrokristallines Polyamid mit mehr als 60 Mol-% an Monomeren mit ausschliesslich aliphatischen Struktureinheiten, bezogen auf die Gesamtmenge an Monomeren, ist; und

A2 mindestens ein acyclisch aliphatisches Polyamid ist; und

wobei die Summe der Komponenten A1 und A2 100 Gew.-% der Komponente A ergibt;

0.05 bis 2.0 Gew.-% mindestens eines Farbmittels B;

0.10 bis 3.0 Gew.-% mindestens eines Stabilisators C

0 bis 10 Gew.-% Zusatzstoffe D, verschieden von A, B und C;

wobei sich die Gewichtsanteile der Komponenten A bis D auf 100 Gew.-% ergänzen;

wobei die Polyamid-Formmasse weder Russ noch Nigrosin umfasst;

wobei die Farbhelligkeit L*, bestimmt gemäss DIN EN ISO 11664-4:2020 im CIELAB-Farbraum an einer Platte der Dimension 60 x 60 x 2 mm, höchstens 32 ist; und wobei die Polyamide A1 eine Transparenz von mindestens 88%, bevorzugt von mindestens 90%, und einen Haze von höchstens 5%, bevorzugt von höchstens 3%, jeweils bestimmt gemäss ASTM-D1003-21 an einer Platte der Dimension 60 x 60 x 2 mm, aufweisen.

Vorteilhafte Ausführungsformen der erfindungsgemäßen Polyamid-Formmasse sind in den abhängigen Ansprüchen 2 bis 13 angegeben.

Weiterhin betrifft die vorliegende Erfindung gemäss Anspruch 14 Formkörper, welche die erfindungsgemäße Polyamid-Formmasse enthalten und bevorzugt aus dieser bestehen. Weiterhin betrifft die Erfindung die Verwendung der erfindungsgemässen Farbmittel in schwarz eingefärbten Polyamid-Formmassen auf Basis von transparenten Polyamiden zur Verbesserung der Bewitterungsbeständigkeit gemäss Anspruch 15.

Beariffsdefinitionen

Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der DIN EN ISO-Norm 16396-1:2015 festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methylcyclohexyl)methan (auch als 3,3'-Dimethyl-4,4'-diaminodicyclohexylmethan bezeichnet, CAS-Nr. 6864-37-5), PACM für Bis(4-aminocyclohexyl)methan (auch als 4,4'-Diaminodicyclohexylmethan bezeichnet, CAS-Nr. 1761-71-3), TMDC für Bis(4-amino-3,5-dimethylcyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5), BAC für 1,4-Bis(aminomethyl)cyclohexan (CAS-Nr. 2549-93-1).

Mengenangaben

Die Polyamid-Formmassen gemäß der vorliegenden Erfindung enthalten die Komponenten A bis D oder bestehen bevorzugt ausschließlich aus den Komponenten A bis D. Es gilt dabei die Massgabe, dass sich die Komponenten A bis D in Summe auf 100 Gew.-% ergänzen. Die festgelegten Bereiche der Mengenangaben für die einzelnen Komponenten A bis D sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten A bis D 100 Gew.-% ergibt.

Amorphe oder mikrokristalline Polyamide

Amorphe oder mikrokristalline Polyamide zeigen in der dynamischen Differenz-Kalorimetrie (engl. Differential Scanning Calorimetry, DSC) nach DIN EN ISO 11357-3 (2018) bei einer Aufheizrate von 20 K/min bevorzugt eine Schmelzwärme von maximal 25 J/g, besonders bevorzugt von maximal 22 J/g, ganz besonders bevorzugt 0 bis 20 J/g.

Mikrokristalline Polyamide besitzen neben einer Glasübergangstemperatur auch einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 90 % und ihr Haze höchstens 3 % beträgt, gemessen nach ASTM D 1003-21 (2021).

Amorphe Polyamide weisen verglichen mit den mikrokristallinen Polyamiden keine oder nur eine sehr geringe, kaum nachweisbare Schmelzwärme, auf. Die amorphen Polyamide zeigen in der dynamischen Differenz-Kalorimetrie nach DIN EN ISO 11357-3 (2018) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie nach DIN EN ISO 11357-3 (2018) bei einer Aufheizrate von 20 K/min bevorzugt eine Schmelzwärme von mehr als 25 J/g, besonders bevorzugt von wenigstens 30 J/g, ganz besonders bevorzugt von wenigstens 35 J/g aufweisen. Eine aus teilkristallinen Polyamiden hergestellte Platte mit einer Dicke von 2 mm ist nicht transparent, d.h. ihre Lichttransmission liegt unter 90 % und/oder ihr Haze über 3 %, jeweils gemessen nach ASTM D 1003-21 (2021).

Transparente Polyamide

Im Sinne der vorliegenden Erfindung liegt ein transparentes Polyamid vor, wenn dessen nach ASTM D 1003-21 (2021) an Platten mit einer Dicke von 2 mm gemessene Lichttransmission mindestens 88%, bevorzugt mindestens 90% und dessen Haze höchstens 5%, bevorzugt höchstens 3% beträgt. Wenn im Folgenden von transparenten Polyamiden gesprochen wird, sind stets amorphe oder mikrokristalline Polyamide gemeint, die die obigen Definitionen bezüglich Transparenz und Schmelzwärme erfüllen.

Komponente A, A1 und A2:

Die erfindungsgemässe Polyamid-Formmasse enthält 85 bis 99.85 Gew.-% einer Komponente A, wobei die Komponente A besteht aus Polyamid A1 oder aus einer Mischung der Polyamide A1 und A2, bezogen auf die Summe der Komponenten A bis D. Die Gewichtsanteile der Komponenten A1 und A2 ergänzen sich dabei auf 100 Gew.-% der Komponente A und der Gehalt an Polyamid A1 in der Komponente A beträgt bevorzugt mindestens 50 Gew.-%. Die Komponente A1 ist dabei mindestens ein transparentes Polyamid, welches wenigstens 60 Mol-% an Monomeren mit ausschliesslich aliphatischen Struktureinheiten, bezogen auf die Gesamtmenge an Monomeren im Polyamid A1 enthält. A1 ist amorph oder mikrokristallin.

Die Komponente A besteht bevorzugt aus 50 bis 95 Gew.-% Polyamid A1 und 5 bis 50 Gew.-% Polyamid A2, besonders bevorzugt aus 60 bis 85 Gew.-% Polyamid A1 und 15 bis 40 Gew.-% Polyamid A2 und insbesondere bevorzugt aus 65 bis 80 Gew.-% aus Polyamid A1 und 20 bis 35 Gew.-% Polyamid A2 besteht.

A2 ist mindestens ein acyclisch aliphatisches Polyamid. Die Polyamide A2 sind bevorzugt ausgewählt aus der Gruppe bestehend aus PA 11, PA 12, PA 1010, PA 1016, PA 610, PA 612, PA 614, PA 616, PA 66, PA 6, PA 6/12 sowie Mischungen davon.

Bei den wenigstens 60 Mol-% an Monomeren mit ausschliesslich aliphatischen Struktureinheiten kann es sich um aliphatische Diamine, aliphatische Dicarbonsäuren, aliphatische Lactame oder aliphatischen Aminocarbonsäuren handeln. Das Polyamid A1 setzt sich also aus wenigstens 60 Mol-% an Monomeren mit ausschliesslich aliphatischen Struktureinheiten und maximal 40 Mol-% an Monomeren, die aromatische Struktureinheiten enthalten, zusammen.

Weiterhin gelten die Massgaben, dass die transparenten Polyamide A1 eine Transparenz von mindestens 88%, bevorzugt von mindestens 90% und einen Haze von höchstens 5%, bevorzugt von höchstens 3% aufweisen.

Gemäss einer bevorzugten Ausführungsform der vorliegenden Erfindung ist die Komponente A1 amorph.

Nach einer bevorzugten Ausführungsform der vorliegenden Erfindung liegt der Anteil von Komponente A im Bereich von 91 bis 99.72 Gew.-%, besonders bevorzugt 94.7 bis 99.55 Gew.-%, jeweils bezogen auf die Summe der Komponenten A bis D.

Gemäß einer weiteren bevorzugten Ausführungsform der vorliegenden Erfindung sind die transparenten Polyamide A1 aus den folgenden Monomeren aufgebaut:

a-A1      15 bis 100 Mol-% an cycloaliphatischen Diaminen, bezogen auf die Gesamtmenge an Diaminen;

b-A1      0 bis 85 Mol-% an offenkettigen, aliphatischen Diaminen, bezogen auf die Gesamtmenge an Diaminen;

c-A1      20 bis 100 Mol-% an aliphatischen Dicarbonsäuren, bezogen auf die Gesamtmenge an Dicarbonsäuren;

d-A1      0 bis 80 Mol-% an aromatischen Dicarbonsäuren, bezogen auf die Gesamtmenge an Dicarbonsäuren;

e-A1      0 bis 40 Mol-% an aliphatischen Lactamen und/oder aliphatischen Aminocarbonsäuren mit 6 bis 12 Kohlenstoffatomen, bezogen auf die Gesamtmenge der Monomere a-A1 bis e-A1;

wobei die Summe der Diamine a-A1 und b-A1 100 Mol-% ergibt; und wobei die Summe der Dicarbonsäuren c-A1 und d-A1 100 Mol-% ergibt.

Nach einer anderen bevorzugten Ausführungsform der vorliegenden Erfindung enthält das transparente Polyamid A1 wenigstens 63 Mol-%, bevorzugt wenigstens 68 Mol-%, insbesondere wenigstens 70 Mol-%, besonders bevorzugt im Bereich von 60 bis 100 Mol-% oder 63 bis 100 Mol-% oder 68 bis 100 Mol-% an Monomeren mit ausschliesslich aliphatischen Struktureinheiten, bezogen auf die Gesamtmenge an Monomeren. Dabei ergibt sich die Gesamtmenge an Monomeren als Summe der Komponenten a-A1 bis e-A1, und der Gehalt an Monomeren mit ausschliesslich aliphatischen Struktureinheiten ergibt sich als Summe der Komponenten a-A1, b-A1, c-A1 und e-A1.

Eine andere bevorzugte Ausführungsform vorliegender Erfindung sieht vor, dass das wenigstens eine Polyamid A2 ausgewählt ist aus der Gruppe bestehend aus PA 11, PA 12, PA 1010, PA 1016, PA 610, PA 612, PA 614, PA 616, PA 66, PA 6, PA 6/12, sowie Mischungen davon.

Eine andere bevorzugte Ausführungsform der vorliegenden Erfindung sieht vor, dass das cycloaliphatische Diamin a-A1 ausgewählt ist aus der Gruppe bestehend aus Bis-(4-amino-3-methylcyclohexyl)methan (MACM), Bis-(4-aminocyclohexyl)methan (PACM), Bis-(4-amino-3-ethylcyclohexyl)methan, Bis-(4-amino-3,5-dimethylcyclohexyl)methan, 2,6-Norbornandiamin (2,6-Bis-(aminomethyl)norbornan), 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan (BAC), 2,2-(4,4'-Diaminodicyclohexyl)propan und Mischungen daraus. Besonders bevorzugt sind die cycloaliphatischen Diamine a-A1 ausgewählt aus der Gruppe bestehend aus Bis-(4-amino-3-methylcyclohexyl)methan (MACM) und Bis(4-amino-cyclohexyl)methan (PACM) und Mischungen hiervon.

Gemäss einer anderen bevorzugten Ausführungsform ist das Diamin b-A1 ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus. Besondere bevorzugt sind die offenkettigen, aliphatischen Diamine b-A1 ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass die aliphatische Dicarbonsäure c-A1 ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, 1,3-Cyclopentandicarbonsäure, 1,3-Cyclohexandicarbonsäure, 1,4-Cyclohexandicarbonsäure, 2,3-Norbornandicarbonsäure, 2,6-Norbornandicarbonsäure und Mischungen daraus. Besonders bevorzugt sind die aliphatischen Dicarbonsäuren c-A1 ausgewählt aus der Gruppe bestehend aus Dicarbonsäuren mit 6 bis 12 Kohlenstoffatomen, insbesondere 1,6-Hexandisäure, 1,10-Decandisäure, 1,12-Dodecandisäure, und Mischungen hiervon.

Nach einer weiteren bevorzugten Ausführungsform der vorliegenden Erfindung ist die aromatische Dicarbonsäure d-A1 ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon. Besonders bevorzugt sind die aromatischen Dicarbonsäuren d-A1 ausgewählt aus der Gruppe bestehend aus Terephthalsäure, Isophthalsäure und Mischungen hiervon.

Nach einer weiteren bevorzugten Ausführungsform der vorliegenden Erfindung ist das Lactam und/oder sind die $\alpha,\omega$-Aminocarbonsäuren e-A1 ausgewählt aus der Gruppe bestehend aus Caprolactam (CL), $\alpha,\omega$-Aminocapronsäure, $\alpha,\omega$-Aminoheptansäure, $\alpha,\omega$-Aminoctansäure, $\alpha,\omega$-Aminononansäure, $\alpha,\omega$-Aminodecansäure, $\alpha,\omega$-Aminoundecansäure (AUA), Laurinlactam (LL) und $\alpha,\omega$-Aminododecansäure (ADA), besonderes bevorzugt sind Caprolactam, $\alpha,\omega$-Aminocapronsäure, Laurinlactam, $\alpha,\omega$-Aminoundecansäure und $\alpha,\omega$-Aminododecansäure und Mischungen daraus.

Eine weitere bevorzugte Ausführungsform der vorliegenden Erfindung sieht vor, dass das cycloaliphatische Diamin a-A1 ausgewählt ist aus der Gruppe bestehend aus Bis-(4-amino-3-methylcyclohexyl)methan, Bis-(4-aminocyclohexyl)methan, Bis-(4-amino-3,5-dimethylcyclohexyl)methan, 1,3-Bis-(aminomethyl)cyclohexan, 1,4-Bis-(aminomethyl)cyclohexan und Mischungen daraus und/oder das Diamin b-A1 ausgewählt ist aus der Gruppe bestehend aus 1,6-Hexandiamin, 1,9-Nonandiamin, 1,10-Decandiamin, 1,11-Undecandiamin, 1,12-Dodecandiamin, und Mischungen daraus und/oder die aliphatische Dicarbonsäure c-A1 ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus und/oder die aromatische Dicarbonsäure d-A1 ausgewählt ist aus der Gruppe bestehend aus Terephthalsäure, Isophthalsäure, 1,5-Naphthalindicarbonsäure und 2,6-Naphthalindicarbonsäure und Mischungen davon und/oder das Lactam und/oder die $\alpha,\omega$-Aminocarbonsäuren e-A1 ausgewählt sind aus der Gruppe bestehend aus Caprolactam (CL), $\alpha,\omega$-Aminocapronsäure, , $\alpha,\omega$-Aminoundecansäure (AUA), Laurinlactam (LL) und $\alpha,\omega$-Aminododecansäure (ADA) und Mischungen daraus. Besonders bevorzugt werden alle vorangehend genannten Auswahllisten für die Komponenten a-A1 bis e-A1 gleichzeitig ausgewählt.

Insbesondere bevorzugt sind die Diamine a-A1 ausgewählt aus der Gruppe bestehend aus Bis-(4-amino-3-methylcyclohexyl)methan (MACM) und Bis(4-aminocyclohexyl)methan (PACM) und Mischungen hiervon und die offenkettigen, aliphatischen Diamine b-A1 sind ausgewählt aus der Gruppe bestehend aus 1,6-Hexandiamin, 1,9-Nonandiamin, 1,10-Decandiamin und Mischungen hiervon und die aliphatischen Dicarbonsäuren c-A1 sind ausgewählt sind aus der Gruppe bestehend aus 1,6-Hexandisäure, 1,10-Decandisäure, 1,12-Dodecandisäure und Mischungen hiervon und die aromatischen Dicarbonsäuren d-A1 sind ausgewählt aus der Gruppe bestehend aus Terephthalsäure, Isophthalsäure und Mischungen hiervon und die Lactame und/oder Aminocarbonsäuren e-A1 sind ausgewählt aus der Gruppe bestehend aus Caprolactam, Aminocapronsäure, Aminoundecansäure, Laurinlactam und Aminododecansäure und Mischungen hiervon.

Gemäss einer weiteren bevorzugten Ausführungsform der vorliegenden Erfindung ist das Polyamid A1 ausgewählt aus der Gruppe bestehend aus PA MACM9, PA MACM10, PA MACM11, PA MACM12, PA MACM13, PA MACM14, PA MACM15, PA MACM16, PA MACM17, PA MACM18, PA MACM36, PA PACM9, PA PACM10, PA PACM11, PA PACM12, PA PACM13, PA PACM14, PACM15, PA PACM16, PACM17, PA PACM18, PA PACM36, PA TMDC9, PA TMDC10, PA TMDC11, PA TMDC12, PA TMDC13, PA TMDC14, PA TMDC15, PA TMDC16, PA TMDC17, PA TMDC18, PA TMDC36, PA MACM10/1010, PA MACM10/PACM10, PA MACM12/1012, PA MACM14/1014, PA PACM10/1010, PA PACM12/1012, PA PACM14/1014, PA MACM12/PACM12, PA MACM14/PACM14, PA MACMI/12, PA MACMI/1012, PA MACMT/12, PA MACMI/MACMT/12, PA MACMI/MACMT/MACM12, PA 6I/6T/MACMI/MACMT/12, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT/12, PA MACMI/MACMT/MACM36, PA MACMI/MACM36, PA MACMT/MACM36, PA PACMI/12, PA PACMT/12, PA PACMT/6, PA PACMI/6, und Mischungen hiervon.

Besonders bevorzugt besteht die Komponente A aus folgenden Kombinationen der Polyamide A1 und A2:

- Polyamid A1 ist PA 6I/6T/612/MACMI/MACMT/MACM12 und Polyamid A2 ist PA 12, oder
- Polyamid A1 ist PA MACMI/12 und Polyamid A2 ist PA 12, oder
- Polyamid A1 ist PA MACM12 und Polyamid A2 ist PA 12.

Bevorzugt besteht die Komponente A wie folgt aus den Polyamiden A1 und A2:

50 bis 95 Gew.-% Polyamid A1 und 5 bis 50 Gew.-% Polyamid A2; oder
60 bis 85 Gew.-% Polyamid A1 und 15 bis 40 Gew.-% Polyamid A2; oder
65 bis 80 Gew.-% Polyamid A1 und 20 bis 35 Gew.-% Polyamid A2. Dabei ist die Summe der Komponenten A1 und A2 100 Gew.-% der Komponente A.

Nach einer weiteren bevorzugten Ausführungsform der vorliegenden Erfindung weist die Komponente A1 eine nach DIN EN ISO 11357-2:2020 bestimmte Glasübergangstemperatur von mindestens 135 °C, bevorzugt mindestens 140 °C besonders bevorzugt 145 °C und insbesondere bevorzugt 150 °C aufweist.

Gemäss einer weiteren bevorzugten Ausführungsform der vorliegenden Erfindung sind die Polyamide A1 frei an Monomeren mit aromatischen Struktureinheiten.

Bevorzugt hat die Komponente A1 eine relative Viskosität, gemessen nach ISO 307:2007 in einer Lösung von 0.5 g Polymer in 100 ml m-Kresol bei 20°C, im Bereich von 1.35 bis 2.40, besonders bevorzugt von 1.40 bis 1.90 und insbesondere bevorzugt von 1.45 bis 1.80. Bevorzugt hat die Komponente A2 eine relative Viskosität, gemessen nach ISO 307:2007 in einer Lösung von 0.5 g Polymer in 100 ml m-Kresol bei 20°C, im Bereich von 1.70 bis 3.00, besonders bevorzugt von 1.75 bis 2.70 und insbesondere bevorzugt von 1.80 bis 2.40.

Komponente B

Bei Komponente B handelt es sich um Farbmittel oder Mischungen von Farbmitteln, die geeignet sind die Polyamid-Formmasse schwarz einzufärben. Im Sinne der vorliegenden Erfindung bedeutet schwarz eingefärbt, dass die Farbhelligkeit L* der Polyamid-Formmasse, bestimmt gemäss DIN EN ISO 11664-4:2020, maximal 32 beträgt. Farbmittel können organisch oder anorganisch, Farbstoffe oder Pigmente sein. Farbstoffe sind Farbmittel, die normalerweise kein Licht streuen, sondern sie absorbieren Licht bei einer bestimmten sichtbaren Wellenlänge. Farbstoffe sind oft in einer bestimmten Konzentration in der Polymermatrix löslich. Pigmente sind organische oder anorganische Farbstoffe, die in der Regel als diskrete, in der Polymermatrix unlösliche Teilchen vorliegen. Die Bezeichnung eines bestimmten Farbstoffs als Pigment oder Farbstoff hängt von der Polymermatrix, der Farbstoffkonzentration und Kristallinität, der Temperatur und anderen Faktoren ab. Hinsichtlich der vorliegenden Erfindung sind bevorzugte Farbmittel in der Polyamid-Formmasse in den Konzentrationen löslich, die zum Färben der Formteile erforderlich sind. Die erfindungsgemässen PolyamidFormmassen sind frei an Russ und/oder Nigrosin, enthalten also weder Russ noch Nigrosin.

Erfindungsgemäss werden Farbmittel in Mengen und in Kombinationen eingesetzt, die ausreichen, um die Formmassen schwarz und weitgehend undurchsichtig einzufärben, und insbesondere, um die unten beschriebenen Helligkeitswerte (Farbhelligkeit) und/oder Transmissionswerte im sichtbaren und nahen Infrarot-Bereich zu erzielen. Die spezifische Menge eines verwendeten Farbmittels hängt unter anderem von seiner Löslichkeit und seinem Extinktionskoeffizienten in der thermoplastischen Matrix ab und davon, ob es in Kombination mit einem oder mehreren zusätzlichen Farbmitteln verwendet wird.

Der Anteil von Komponente B liegt im Bereich von 0.05 bis 2.0 Gew.-%, bezogen auf die Summe der Komponenten A bis D. Nach einer bevorzugten Ausführungsform der vorliegenden Erfindung liegt der Anteil von Komponente B im Bereich von 0.08 bis 1.5 Gew.-% und besonders bevorzugt 0.10 bis 1.0 Gew.-%, jeweils bezogen auf die Summe der Komponenten A bis D.

Geeignete Farbmittel weisen im Allgemeinen hohe Extinktionskoeffizienten im sichtbaren Wellenlängenbereich, niedrige Extinktionskoeffizienten im nahen Infrarot-Bereich (NIR) und eine hohe thermische Stabilität auf. Eine hohe thermische Stabilität der Farbmittel liegt dann vor, wenn keine signifikante Farbverschiebung oder thermischer Abbau bei der Herstellung und Verarbeitung der eingefärbten Formmassen durch Spritzguss oder Extrusion im Temperaturbereich zwischen 230 und 300 °C beobachtet werden. Darüber hinaus sollten die Farbmittel das Polymer nicht angreifen oder abbauen, was zu einem inakzeptablen Verlust der mechanischen Eigenschaften oder zur Bildung von gasförmigen Nebenprodukten während des Formens führen kann.

Synthetische Farbmittel werden typischerweise aus Steinkohlenteer oder Erdöl-Zwischenprodukten gewonnen. Für die Verwendung in thermoplastischen Kunststoffen sind Farbstoffe vieler verschiedener Typen verfügbar. Der Color-Index nennt viele verschiedene chemische Klassen von Farbstoffen, darunter z. B. Nitroso, Nitro, Mono-Azo, Diazo, Triazo, Polyazo, Azo, Stilben, Carotinoid, Diphenylmethan, Triarylmethan, Xanthen, Chinolin, Acridin, Methin, Thiazol, Indamin, Indophenol, Azin, Oxazin, Thiazin, Schwefel, Lacton, Aminoketon, Hydroxyketon, Anthrachinon, Indigloid und Phthalocyanin, sowie anorganische Pigmente.

Bevorzugt werden Farbmittel oder Farbmittel-Kombination ausgewählt aus der Gruppe bestehend aus aus Pyrazolon-, Perinon- und Anthrachinon-, Methin-, Azo- und Cumarin-Farbstoffen und/oder metallhaltigen Pigmenten, wie anorganischen Pigmenten und die Metallkomplexen von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmitteln.

Beispiele für anorganische Pigmente sind Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chromantimontitanat, Chromoxide, Eisenoxide, Kobaltblau, Kobaltchromblau, Kobaltnickelgrau, Manganblau, Manganviolett, Molybdatorange, Molybdatrot, Nickelantimontitanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb. Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin- oder Thiazinreihe.

Bevorzugt enthält das mindestens eine Farbmittel B wenigstens ein nachfolgend genanntes Farbmittel und besonders bevorzugt ist das wenigstens eine Farbmittel B ausgewählt aus der Gruppe der nachfolgend genannten Farbmitteln, im Folgenden angegeben als Color Index Generic Names (CIGN): Solvent Green 3, Solvent Green 28, Solvent Red 52, Solvent Red 111, Solvent Red 135, Solvent Red 169, Solvent Red 179, Solvent Red 207, Disperse Red 22, Vat Red 41, Solvent Orange 60, Solvent Orange 63, Solvent Violet 13, Solvent Violet 14, Solvent Violet 50, Disperse Blue 73, Solvent Blue 97, Solvent Blue 101, Solvent Blue 104, Solvent Blue 138, Disperse Yellow 160, Solvent Yellow 84, Solvent Yellow 93, Solvent Yellow 98, Solvent Yellow 163, Solvent Yellow 160:1, und Mischungen davon. Diese Farbmittel weisen eine gute thermische Stabilität auf.

Bevorzugte Farbmittel mit Phthalocyaninstruktur sind beispielsweise Pigment Blue 15:1, Pigment 15:3, Pigment Blue 16 und Pigment Green 7.

Bevorzugt als Komponente B werden weiterhin Solvent Brown 53, Pigment Brown 23, Pigment Brown 24, Pigment Brown 25, Pigment Orange 68, Solvent Orange 60, Solvent Orange 63 und Pigment Brown 6.

Besonders bevorzugte Farbstoffe sind Solvent Red 135, Solvent Red 179, Solvent Violet 13, Solvent Violet 14, Solvent Violet 36, Solvent Violet 50, Disperse Blue 73, Solvent Yellow 93, Solvent Green 3, Disperse Yellow 160, Solvent Blue 97, sowie Mischungen, die mindestens einen der vorgenannten Farbstoffe enthalten.

Bevorzugt werden die erfindungsgemässen Polyamid-Formmassen derart mit Farbmitteln (Komponente B) versehen, dass die im CIE-LAB Lichtraum gemessene Farbhelligkeit L* gleich oder kleiner 30, besonders bevorzugt gleich oder kleiner 27 ist.

In einer weiteren bevorzugten Ausführungsform werden die Farbmittel so ausgewählt und in ihrem Gehalt derart angepasst, dass die Transmission der aus den erfindungsgemässen Polyamid-Formmassen hergestellten Platten der Dimension 60 x 60 x 2 mm im Wellenlängenbereich von 400 bis 650 nm höchstens 10%, bevorzugt höchstens 5% und besonders bevorzugt höchstens 3% beträgt. Die Messungen wurden mit einem Cary 5000 UV/VIS/NIR-Spektrometer von Agilent Technologies mit Integrationskugel nach DIN EN ISO 13468-2:2006 durchgeführt.

Weiterhin wird bevorzugt, wenn die aus den erfindungsgemässen Polyamid-Formmassen hergestellten Platten der Dimension 60 x 60 x 2 mm im Wellenlängenbereich von 750 bis 1200 nm eine Transmission von wenigstens 50%, besonders bevorzugt von wenigstens 60% und insbesondere bevorzugt von wenigstens 70% haben. Die Messungen wurden mit einem Cary 5000 UV/VIS/NIR-Spektrometer von Agilent Technologies mit Integrationskugel nach DIN EN ISO 13468-2:2006 durchgeführt.

Besonders bevorzugt werden die Farbmittel ausgewählt aus der Gruppe der folgenden Farbstoff-Mischungen:

- Solvent Green 3 und Solvent Red 179

- Solvent Red 52 und Solvent Blue 97

- Solvent Green 3, Solvent Blue 97 und Solvent Red 179.

Ganz besonders bevorzugt wird als Farbmittel eine Mischung B aus den folgenden Komponenten:

| B1 | 20 - 40 Gew.-% Solvent Green 3 |
| B2 | 10 - 30 Gew.-% Solvent Blue 97 |
| B3 | 40 - 70 Gew.-% Solvent Red 179 |

wobei die Summe der Komponenten B1 bis B3 100 Gew.-% der Mischung B (Komponente B) ergibt. Bevorzugt beträgt der Gehalt dieser Farbmittel-Mischung B 0.15 bis 0.25 Gew.-% bezogen auf die Summe der Komponenten A bis D.

Komponente C

Die erfindungsgemässe Formmasse enthält als Komponente C mindestens einen Stabilisator ausgewählt aus der Gruppe anorganische und organische Stabilisatoren, insbesondere Antioxidantien, Antiozonantien, Hitzestabilisatoren, Lichtschutzmitteln, UV-Stabilisatoren, UV-Absorbern oder UV-Blockern. Bevorzugt ist der Stabilisator C ein UV- und/oder ein Hitzestabilisator.

Der Gehalt des Stabilisator C beträgt 0.10 bis 3.0 Gew.-%, bevorzugt 0.20 bis 2.5 Gew.-% und besonders bevorzugt 0.25 bis 2.3 Gew.-%, jeweils bezogen auf die Summe A bis D.

Die Komponente C kann dabei gemäss einer bevorzugten Ausführungsform ausgewählt sein aus der folgenden Gruppe:

- Verbindungen des ein- oder zweiwertigen Kupfers, insbesondere Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat sind, oder Mischungen dieser Verbindungen, wobei diese Kupfer-Verbindungen als solche oder bevorzugtermassen in Form von Konzentraten eingesetzt werden. Dabei ist unter Konzentrat ein Polymer, vorzugsweise gleicher oder im Wesentlichen gleicher chemischer Natur wie Komponente A1 oder A2, zu verstehen, welches das Kupfersalz bzw. die Kupferverbindung in hoher Konzentration enthält. Insbesondere bevorzugt werden die Kupferverbindungen in Kombination mit weiteren Metallhalogeniden, einschliesslich Alkalihalogeniden, wie NaI, KI, NaBr, KBr, eingesetzt, wobei das molare Verhältnis von Metallhalogenid zu Kupfer 0.5 bis 20, bevorzugt 1 bis 10 und besonders bevorzugt 2 bis 7 beträgt;
- Stabilisatoren auf Basis sekundärer aromatischer Amine;
- Stabilisatoren auf Basis sterisch gehinderter Phenole;
- Phosphiten und Phosphoniten,
- Stabilisatoren ausgewählt aus der Gruppe bestehend aus N,N'-Oxamide, Hydroxyphenyltriazine, Hydroxyphenylbenzotriazole, Dibenzoylmethane, Aminohydroxybenzoylbenzoesäureester, Hydroxybenzophenone, Hindered Amin Light Stabilizers (HALS), sowie
- Mischungen der vorstehend genannten Stabilisatoren.

Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon. Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von Irgatec NC 66 (erhältlich von BASF) und einer Kupferstabilisierung auf Basis von Cul und KI. Insbesondere bevorzugt wird eine Wärmestabilisierung ausschliesslich auf Basis von Cul und KI.

Gemäss einer weiteren bevorzugten Ausführungsform sind die Hitzestabilisatoren der Komponente C ausgewählt aus der Gruppe der Phenol-basierten Hitzestabilisatoren, Phosphitbasierten Hitzestabilisatoren, Amin-basierten Hitzestabilisatoren, oder Mischungen oder Kombinationen davon, wobei insbesondere bevorzugt Komponente C ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)propionat), N,N'-Hexamethylen bis[3-(3,5-di-t-butyl-4 -hydroxyphenyl)propionamid], Tris (2,4-di-tert-butylphenyl) phosphit, Tris (2,4-di-tert-butylphenyl)phosphit, oder Mischungen davon.

Bevorzugte organische Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt als Komponente (D) wird eine Mischung aus 10 Gew.-Teilen einer Mischung aus Irganox 1010 (CAS 6683-19-8, phenolisches Antioxidants) und Anox 20 (CAS 6683-19-8, phenolisches Antioxidants) im Verhältnis 7:3 sowie 2 Gew.-Teile Hostanox PAR24 (CAS: 31570-04-4, Tris(2,4-ditert-butylphenyl)phosphite).

Bevorzugte UV-Stabilisatoren sind beispielsweise ausgewählt aus der Gruppe bestehend aus N-(2-Ethoxyphenyl)-N'-(2-ethylphenyl)oxamide (Tinuvin 312), 2-(4,6-Diphenyl-1,3,5-triazin-2yl)-5-hexyloxyphenol (Tinuvin 1577), 2-(4,6-Diaryl-1,3, 5-triazin-2yl)-5-(alkoxy su bstitu iert)-phenol (Tinuvin 1600), 2-tert-butyl-6-(5-chlorobenzotriazol-2-yl)-4-methylphenol (Tinuvin 326), 2-(benzo-triazol-2-yl)-4,6-bis(2-phenylpropan-2-yl)phenol (Tinuvin 234), Bis(2,2,6,6,-tetramethyl-4-piperidyl)sebacat (Tinuvin 770 DF), 2-(2-Hydroxyphenyl)-benzotriazol-Derivat (Tinuvin Carboprotect), 2-(Benzotriazol-2-yl)-4,6-bis(2-methylbutan-2-yl)phenol (Tinuvin 328), 2-(Benzotriazol-2-yl)-6-[[3-(benzotriazol-2-yl)-2-hydroxy-5-(2,4,4-trimethylpentan-2-yl)phenyl]methyl]-4-(2,4,4-trimethylpentan-2-yl)phenol (Tinuvin 360), Poly[[6-[(1,1,3,3-tetra-methylbutyl)amino]-1,3,5-triazin-2,4-diyl][(2,2,6,6-tetramethyl-4-piperidinyl)-imino]-1,6-hexandiyl[(2,2,6,6-tetramethyl-4-piperidinyl)-imino]]) (Chimasorb 944 FD), 1-(4-Metoxyphenyl)-3-(4-tert-butylphenyl)propan-1,3-dion (Parsol 1789) und Mischungen hiervon.

Komponente D

Die erfindungsgemässe Polyamid-Formmasse weist weiterhin von 0 bis 10 Gew.-% der Komponente D, bezogen auf die Summe der Komponenten A bis D, auf.

Nach einer bevorzugten Ausführungsform der vorliegenden Erfindung ist der Anteil von Komponente D in der Polyamid-Formmasse im Bereich von 0 bis 5.0 Gew.-% und besonders bevorzugt 0.10 bis 2.0 Gew.-%, jeweils bezogen auf die Summe der Komponenten A bis D. Eine weitere bevorzugte Ausführungsform sieht vor, dass der mindestens eine Zusatzstoff D ausgewählt ist aus der Gruppe bestehend aus Monomeren, insbesondere Lactamen, Weichmachern, Schlagzähmodifikatoren, Gleitmitteln, Entformungsmitteln, Kondensationskatalysatoren, Kettenreglern, insbesondere monofunktionellen Carbonsäuren oder Aminen, Entschäumern, Antiblockmitteln, natürlichen Schichtsilikaten, synthetischen Schichtsilikaten, nanoskaligen Füllstoffen und Mischungen davon.

Polyamid-Formmasse

Eine bevorzugte Ausführungsform der vorliegenden Erfindung sieht vor, dass der Anteil von Komponente A in der Polyamid-Formmasse im Bereich von 91 bis 99.72 Gew.-% und besonders bevorzugt im Bereich von 94.7 bis 99.55 Gew.-% liegt, und der Anteil von Komponente B in der Polyamid-Formmasse im Bereich von 0.08 bis 1.5 Gew.-% und besonders bevorzugt 0.10 bis 1.0 Gew.% liegt, und der Anteil von Komponente C in der Formmasse im Bereich von 0.20 bis 2.5 Gew.-% und besonders bevorzugt im Bereich von 0.25 bis 2.3 Gew.% liegt, und der Anteil von Komponente D in der Formmasse im Bereich von 0 bis 5.0 Gew.-% und besonders bevorzugt im Bereich von 0.10 bis 2.0 Gew.% liegt, wobei die genannten Anteile jeweils auf die Summe der Komponenten A bis D bezogen sind.

Die erfindungsgemässen Polyamid-Formmassen sind frei an Russ und/oder Nigrosin, umfassen also weder Russ noch Nigrosin.

Die Formmassen sind schwarz eingefärbt, d.h. die Absorption im sichtbaren Bereich ist hoch und damit die Lichttransmission niedrig. Die im CIELAB Farbraum gemäss DIN EN ISO 11664-4:2020 an einer Platte der Dimension 60 x 60 x 2 mm bestimmte Farbhelligkeit L* beträgt höchstens 32, bevorzugt höchstens 30 und besonders bevorzugt höchstens 27.

Bevorzugt ist die Transmission im Wellenlängenbereich von 400 bis 650 höchstens 10%, besonders bevorzugt höchstens 5% und insbesondere bevorzugt höchstens 3%.

Weiterhin beträgt die Transmission im Wellenlängenbereich von 750 bis 1200 nm bevorzugt wenigstens 50%, besonders bevorzugt wenigstens 60% und insbesondere bevorzugt wenigstens 70% und die Transmission im Wellenlängenbereich von 400 bis 650 nm höchstens 10 %, höchstens 5% und besonders bevorzugt höchstens 3% beträgt, jeweils an einer Platte der Dimension 60 x 60 x 2 mm gemäss DIN EN ISO 13468-2:2006 mittels einem UV/VIS/NIR-Spektrometer der Marke Cary 5000 von Agilent Technologies mit Integrationskugel bestimmt.

Nach einer anderen bevorzugten Ausführungsform der vorliegenden Erfindung beträgt der an einem aus der Polyamid-Formmasse hergestellten Formkörper (Platte mit der Dimension 60 x 60 x 2 mm) nach ISO 2813:2015 bei einer Temperatur von 23 °C gemessene Glanz unter einem Winkel von 60° mindestens 90 %, bevorzugt mindestens 95 % und besonders bevorzugt mindestens 100 %.

Eine andere bevorzugte Ausführungsform der vorliegenden Erfindung sieht vor, dass der gemäß ISO 527:2012 bestimmte Zug-E-Modul der Polyamid-Formmasse im Bereich von 1'400 bis 3'000 MPa, bevorzugt von 1'500 bis 2'800 MPa und besonders bevorzugt von 1'600 bis 2'700 MPa liegt.

Nach einer anderen bevorzugten Ausführungsform der vorliegenden Erfindung beträgt die gemäß ISO 527:2012 bestimmte Bruchspannung der Polyamid-Formmasse von 40 bis 120 MPa, bevorzugt von 45 bis 100 MPa und besonders bevorzugt von 50 bis 90 MPa.

Gemäss einer weiteren bevorzugten Ausführungsform der vorliegenden Erfindung ist die gemäß ISO 527:2012 bestimmte Bruchdehnung der Polyamid-Formmasse grösser 20 %, bevorzugt grösser 40 % und besonders bevorzugt im Bereich von 50 bis 200 %.

Nach einer anderen bevorzugten Ausführungsform der vorliegenden Erfindung ist die gemäß IS0179/2:1997 bestimmte Schlagzähigkeit der Polyamid-Formmasse grösser 30 kJ/mm$^2$, bevorzugt grösser 50 kJ/mm$^2$ und besonders bevorzugt ohne Bruch.

Gemäss einer weiteren bevorzugten Ausführungsform der vorliegenden Erfindung beträgt die gemäß ISO 179/2:1997 bestimmte Kerbschlagzähigkeit der Polyamid-Formmasse wenigstens 6 kJ/mm$^2$, bevorzugt wenigstens 7 kJ/mm$^2$ und besonders bevorzugt von 7 bis 20 kJ/mm$^2$.

Eine bevorzugte Polyamid-Formmasse gemäss vorliegender Erfindung besteht aus den folgenden Komponenten:

85 bis 99.85 Gew.-% einer Komponente A, wobei die Komponente A besteht aus Polyamid A1 oder aus einer Mischung bestehend aus 60 bis 90 Gew.-% Polyamid A1 und 10 bis 40 Gew.-% Polyamid A2, wobei

A1    mindestens ein amorphes oder mikrokristallines Polyamid mit mehr als 60 Mol-% an Monomeren mit ausschliesslich aliphatischen Struktureinheiten, bezogen auf die Gesamtmenge an Monomeren, ist; und

A2    mindestens ein acyclisch aliphatisches Polyamid ist;

wobei die Summe der Komponenten A1 und A2 100 Gew.-% der Komponente A ergibt; 0.05 bis 2.0 Gew.-% mindestens eines Farbmittels B;

0.10 bis 3.0 Gew.-% mindestens eines Stabilisators C;

0 bis 10 Gew.-% mindestens eines Zusatzstoffs D, verschieden von A, B und C,

wobei sich die Gewichtsanteile der Komponenten A bis D auf 100 Gew.-% ergänzen;

wobei die Polyamid-Formmasse weder Russ noch Nigrosin umfasst;

wobei die Farbhelligkeit L*, bestimmt gemäß DIN EN ISO 11664-4:2020 im CIELAB-Farbraum, höchstens 30 ist und wobei die Polyamide A1 eine Transparenz, bestimmt nach ASTM D1003-21, von mindestens 90% und einen Haze von höchstens 3% aufweisen. Die Farbhelligkeit und die Transparenz werden dabei an einer Platte der Dimension 60 x 60 x 2 mm bestimmt.

Eine weitere bevorzugte Polyamid-Formmasse gemäss vorliegender Erfindung besteht aus den folgenden Komponenten:

85 bis 99.85 Gew.-% einer Komponente A, wobei die Komponente A besteht aus Polyamid A1 oder aus einer Mischung bestehend aus 60 bis 90 Gew.-% Polyamid A1 und 10 bis 40 Gew.-% Polyamid A2, wobei

A1    mindestens ein amorphes oder mikrokristallines Polyamid mit mehr als 60 Mol-% an Monomeren mit ausschliesslich aliphatischen Struktureinheiten, bezogen auf die Gesamtmenge an Monomeren, ist; und

A2    mindestens ein acyclisch aliphatisches Polyamid ist;

wobei Polyamid A1 ausgewählt ist als 6I/6T/612/MACMI/MACMT/MACM12, MACM12, MACMI/12, PACMI/12, PACM12, MACM12/PACM12, sowie Mischungen davon; wobei Polyamid A2 ausgewählt ist aus der Gruppe bestehend aus PA 11, PA 12, PA 1010, PA 1016, PA 610, PA 612, PA 614, PA 616, PA 66, PA 6, PA 6/12 sowie Mischungen davon, bevorzugt ausgewählt ist als PA6/12 oder PA12; und

wobei die Summe der Komponenten A1 und A2 100 Gew.-% der Komponente A ergibt;

0.05 bis 2.0 Gew.-% mindestens eines Farbmittels B, bestehend aus:

| | | |
|---|---|---|
| B1 | 20 - 40 Gew.-% | Solvent Green 3 |
| B2 | 10 - 30 Gew.-% | Solvent Blue 97 |
| B3 | 40 - 70 Gew.-% | Solvent Red 179 |

wobei die Summe der Komponenten B1 bis B3 100 Gew.-% der Komponente B ergibt;

0.10 bis 3.0 Gew.-% mindestens eines Stabilisators C;

0 bis 10 Gew.-% mindestens eines Zusatzstoffs D, verschieden von A, B und C,

wobei sich die Gewichtsanteile der Komponenten A bis D auf 100 Gew.-% ergänzen;

wobei die Polyamid-Formmasse weder Russ noch Nigrosin umfasst;

wobei die Farbhelligkeit L*, bestimmt gemäss DIN EN ISO 11664-4:2020 im CIELAB-Farbraum, höchstens 30 ist und wobei die Polyamide A1 eine Transparenz von mindestens 90% und einen Haze von höchstens 3%, bestimmt nach ASTM D1003-21, aufweisen. Die Farbhelligkeit und die Transparenz werden dabei an einer Platte der Dimension 60 x 60 x 2 mm bestimmt.

## Formkörper

Die vorliegende Erfindung betrifft weiterhin Formkörper umfassend die Formmasse wie oben definiert, bevorzugt besteht der Formkörper aus dieser Polyamid-Formmasse. Diese Formkörper sind insbesondere ausgewählt aus der Gruppe bestehend aus Innen- und Aussenteile für Automobile, Motorräder, Campingfahrzeugen oder Wohnwagen, Gebäude- und Fassadenteile, dekorative Strukturrahmen, Bedienungsknöpfen oder -hebeln, Abdeckungen, Sichtflächen, hinterleuchtete Komponenten, Blenden von Mobiltelefonen, Tablets, Gehäuse von elektronischen Geräten, Dekorteilen in Fahrzeugen, Haushaltsgeräten, Behältern, Fahrzeugschlüsseln, Freizeit- und Outdoorartikeln.

## Verwendung

Weiterhin betrifft die vorliegende Erfindung die Verwendung eines Farbmittels bzw. Farbmittelgemischs, das weder Russ noch Nigrosin umfasst, mit einer hohen Absorption im Wellenlängenbereich zwischen 400 und 650 nm und einer niedrigen Absorption im Wellenlängenbereich zwischen 750 und 1200 nm zur Verbesserung der Witterungsbeständigkeit von Polyamid-Formmassen auf Basis transparenter Polyamide mit mehr als 60 Mol-% an Monomeren mit aliphatischen Struktureinheiten, bezogen auf die Gesamtmenge der Monomere, die eine Farbhelligkeit L*, bestimmt gemäss DIN EN ISO 11664-4:2020 im CIELAB-Farbraum an einer Platte der Dimension 60 x 60 x 2 mm, von höchstens 32 aufweist.

Anhand der nachfolgenden Beispiele soll der erfindungsgemäße Gegenstand näher erläutert werden, ohne diesen auf die hier gezeigten spezifischen Ausführungsformen einschränken zu wollen. Im Rahmen dieser Anmeldung wurden die folgenden Messmethoden verwendet:

## Haze, Transparenz

Transparenz und Haze wurden nach ASTM D1003-21 auf einem Messgerät Haze Gard Plus der Firma BYK Gardner an 2 mm dicken Platten (60 mm $\times$ 60 mm Oberfläche) mit CIE Lichtart C bei 23 °C gemessen.

## Schmelzpunkt ($T_m$) und Schmelzenthalpie ($\Delta H_m$)

Der Schmelzpunkt und Schmelzenthalpie wurden nach DIN EN ISO 11357-3:2018 am Granulat bestimmt. Die DSC (Differential Scanning Calorimetry) Messungen wurden mit einer Aufheizrate von 20 K/min durchgeführt.

## Glasübergangstemperatur, $T_g$

Die Bestimmung der Glasübergangstemperatur $T_g$ erfolgte nach DIN EN ISO 11357-2:2020 an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. $T_g$ wurde bei der zweiten Aufheizung bestimmt. Der Mittelpunkt des Glasübergangbereichs, welcher als $T_g$ angegeben wurde, wurde nach der Methode "Half Height" ermittelt.

Relative Viskosität, $\eta_{rel}$

Die relative Viskosität wurde gemäß ISO 307 (2007) bei 20 °C bestimmt. Dazu wurden 0.5 g Polymergranulat in 100 ml m-Kresol eingewogen, die Berechnung der relativen Viskosität (RV) nach RV = $t/t_0$ erfolgte in Anlehnung an Abschnitt 11 der Norm.

Zug E-Modul

Die Bestimmung des Zug-E-Moduls und der Zugfestigkeit wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

Bruchspannung und Bruchdehnung

Die Bestimmung von Bruchspannung und Bruchdehnung wurden gemäß ISO 527 (2012) bei 23°C mit einer Zuggeschwindigkeit von 50 mm/min an einem ISO-Zugstab, Typ A1 (Masse 170 x 20/10 x 4 mm), hergestellt gemäß der Norm ISO/CD 3167 (2003), durchgeführt.

Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

Kerbschlagzähigkeit nach Charpy

Die Bestimmung der Kerbschlagzähigkeit nach Charpy wurde gemäß ISO 179/2*eA (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

Glanz 60°

Der Glanz wurde an Platten der Dimension 60x60x2mm mit einem Gerät des Typs Minolta Multi Gloss 268 unter einem Winkel von 60° und bei einer Temperatur von 23 °C nach ISO 2813 (2015) bestimmt. Der Glanzwert wird in dimensionslosen Glanzeinheiten (GU, gloss units) angegeben. Prüfkörper im trockenen Zustand wurden nach dem Spritzguss 48 h bei Raumtemperatur in trockener Umgebung, d.h. über Silicagel gelagert.

Farbmessung

Die CIE L*a*b*-Werte von Referenz- und Test-Farbplättchen wurden mit einem Spectrophotometer der Firma Datacolor (Gerätebezeichnung: Datacolor 650) unter den folgenden Messbedingungen gemäss DIN EN ISO 11664-4:2020 vor einem weisslackierten Kontrastblech bestimmt; Messmodus: Reflexion, Messgeometrie: D/8°, Lichtart: D 65 10, Glanz: eingeschlossen, Kalibrierung: UV-kalibriert, Messblende: SAV.

Bei Verwendung der L*, a*, und b*-Werte von Referenz und Probe entsprechend dem CIELAB Systems berechnet sich die Farbhelligkeitsdifferenz ΔL* wie folgt:

$$\Delta L^* = L^*_{Probe} - L^*_{Referenz}$$

Der Farbabstand ΔE zwischen den Farborten (L*a*b*)Referenz und (L*a*b*)Probe wird als euklidischer Abstand wie folgt berechnet:

$$\Delta E = \sqrt{(L^*_{Probe} - L^*_{Referenz})^2 + (a^*_{Probe} - a^*_{Referenz})^2 + (b^*_{Probe} - b^*_{Referenz})^2}$$

Die für die Farbmessung verwendeten Farbplättchen der Dimension 2 x 40 x 50 mm wurden aus den verschiedenen Materialien auf einer vollelektrischen Spritzgussmaschine der Firma Arburg (Gerätebezeichnung: ARBURG Allrounder 320 A 500-170) mit temperiertem Werkzeug gespritzt. Beim Bewitterungstest ist die Referenz für ΔL* oder ΔE die nicht gelagerte bzw. nicht bewitterte Probe.

Bewitterung

Die Bewitterung wurde nach ISO 4892-2:2013 (Künstliche Bewitterung mit Xenonlampen, "Florida Klima"), gemäss Verfahren A mittels einem Weather-Ometer® Ci 4000 durchgeführt. Die bei 340 nm gemessene Strahlung betrug 0,5 W/m$^2$. Folgender Zyklus wurde dabei gefahren: 102 Minuten trocken, 18 Minuten Beregnung, wobei während der "Trockenphase" die relative Feuchte bei 65% gehalten wurde. Die Black-Standard-Temperatur (Schwarztafel) lag bei 65°C +/- 3°C.

Die in den Beispielen und Vergleichsbeispielen verwendeten Materialien werden in Tabelle 1 zusammengefasst.

**Tabelle 1:** Materialien verwendet für Beispiele und Vergleichsbeispiele

| Komponenten | Beschreibung | Hersteller |
|---|---|---|
| Polyamid 1<br><br>Komponente A1 | PA 61/6T/612/MACMI/MACMT/MACM12 (28/28/19/9/9/7) rel. Viskosität = 1.73<br>aliphatische Struktureinheiten: 63 Mol-% Transparenz: 93 %; Haze: 0.6 %; Tg: 140 °C | EMS-CHEMIE AG (Schweiz) |
| Polyamid 2<br><br>Komponente A1 | PA 61/6T/612/MACMI/MACMT/MACM12 (20/20/24/11/11/14) rel. Viskosität = 1.74<br>aliphatische Struktureinheiten: 69 Mol-% Transparenz: 93 %; Haze: 0.5 %; Tg: 144 °C | EMS-CHEMIE AG (Schweiz) |
| Polyamid 3<br>Komponente A1 | PA MACM12 rel. Viskosität = 1.85<br>aliphatische Struktureinheiten: 100 Mol-% Transparenz: 93 %; Haze: 0.3 %; Tg: 153 °C | EMS-CHEMIE AG (Schweiz) |
| Polyamid 4 | 61/6T/MACMI/MACMT/PACMI/PACMT/12 (39/39/7.1/7.1/2.2/2.5/2.8) rel. Viskosität = 1.62<br>aliphatische Struktureinheiten: 51.4 Mol-% Transparenz: 93 %; Haze: 0.6 %; Tg: 159 °C | EMS-CHEMIE AG (Schweiz) |
| PA 12<br>Komponente A2 | Polyamid 12<br>rel. Viskosität = 1,85 | EMS-CHEMIE AG (Schweiz) |
| Farbmittel 1<br>Komponente B | Mischung aus: 28.6 Gew.-% Macrolex Grün 5B (Solvent Green 3; 61'565), 50.0 Gew.-% Macrolex Rot E2G (Solvent Red 179; 564'150) und 21.4 Gew.-% Macrolex Blau RR (Solvent Blue 97; 651'290) | Lanxess, DE |
| Farbmittel 2<br>Komponente B | Mischung aus: 43.8 Gew.-% Macrolex Grün 5B (Solvent Green 3; 61'565), 35.4 Gew.-% Macrolex Rot E2G (Solvent Red 179; 564'150) und 20.8 Gew.-% Macrolex Rot 5B (Solvent Red 52; 68'210) | Lanxess, DE |
| Russ | Carbon Black FW1 | Orion Engineered Carbons, LU |
| Stabilisator<br>Komponente C | Mischung aus:<br>45.25 Gew.-% Tinuvin 1577 ED (CAS: 147315-50-2), 45.25 Gew.-% Nylostab S-EED P (CAS: 42774-15-2), 4.75 Gew.-% Irganox 1098 (CAS: 23128-74-7), 4.75 Gew.-% Sandostab E-EPQ (CAS: 119345-01-6) | BASF, DE Clariant Int., CH BASF, DE Clariant Int., CH |
| Gleitmittel | Calciumstearat (CAS: 1592-23-0) | Baerlocher, DE |

(fortgesetzt)

| Komponenten | Beschreibung | Hersteller |
|---|---|---|
| Komponente D | | |

Generell werden zur Herstellung der Polyamid-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends oder Masterbatchs zugeführt. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die Dosierungen aller Komponenten werden so über elektronisch gesteuerte Waagen eingestellt, dass die gewünschten Mengenverhältnisse zwischen Polymer und übrigen Komponenten daraus resultieren.

Die Compoundierung erfolgt bei eingestellten Extruder-Zylindertemperaturen von z.B. 230 bis 350 °C, bevorzugt 240 bis 300 °C. Vor der Düse kann Vakuum angelegt oder atmosphärisch entgast werden. Die Schmelze kann entweder in Strangform in ein Wasserbad ausgetragen und dann granuliert werden oder durch Heissabschlag unter Wasser direkt in die Granulatform überführt werden. Bevorzugt wird zum Granulieren eine Unterwassergranulierung oder eine Stranggranulierung verwendet.

Die somit bevorzugt in Granulatform erhaltene Polyamid-Formmasse wird anschließend getrocknet und kann nachher durch Spritzguss zu Formkörpern weiterverarbeitet werden. Dies erfolgt über ein erneutes Aufschmelzen des trockenen Granulats in einem beheizbaren Zylinder, Fördern der Schmelze in eine Spritzgussform, in der die Schmelze erstarren kann.

Herstellung der Polyamid-Formmasse gemäss den Beispiel B1 bis B3 und VB1 bis VB3

Die Formmassen für die Beispiele B1 bis B3 sowie für die Vergleichsbeispiele VB1 bis VB3 wurden auf einem Zweiwellenextruder der Firma Werner & Pfleiderer vom Typ ZSK 25 hergestellt. Die Polyamide A1 und A2 sowie die Farbmittel und Stabilisatoren wurden in den in Tabelle 2 angegebenen Mengenanteilen zusammen mit dem Gleitmittel zu einem Dryblend gemischt. Dieses Dryblend wurde anschliessend in den Einzug des Extruders dosiert.

Die Temperatur des ersten Gehäuses (Einzug) wurde auf 80 °C eingestellt, diejenige der restlichen Gehäuse aufsteigend von 240 bis 280 °C. Es wurde eine Drehzahl von 200 U/min und ein Durchsatz von 15 kg/h verwendet und in der dritten Zone vor der Düse im Stickstoffstrom entgast. Die als Strang ausgetragene Polyamid-Formmasse wurde im Wasserbad bei 80 °C abgekühlt, granuliert und das erhaltene Granulat bei 90 °C im Vakuum bei 30 mbar auf einen Wassergehalt von unter 0.1 Gew.-% getrocknet.

Herstellung der Prüfkörper

Aus dem erhaltenen Granulat wurden Zugstäbe, Schlagstäbe und Platten als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 240 °C bis 280 °C verwendet. Die Werkzeugtemperatur lag im Fall von Platten (2mm $\times$ 60 mm $\times$ 60 mm) der Beispiele B3 und VB2 bei 80, °C, alle anderen Platten wurden bei 120 °C Werkzeugtemperatur hergestellt. Bei den Zug- und Schlagstäben lag die Werkzeugtemperatur bei jeweils 80 °C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

Im Fall von Platten (2mm $\times$ 60 mm $\times$ 60 mm) zur Bestimmung der optischen Eigenschaften wurden die Flächen der Kavität der Spritzgussform hochglanzpoliert, sodass die Formkörper (Platten) eine Hochglanzoberfläche mit einem arithmetischen Mittenrauwert Ra von 0.01 bis 0.08 $\mu$m, und/oder einer Rautiefe Rz von 0.05 bis 1.0 $\mu$m, nach DIN EN ISO 4287:2010 erhielten.

Ergebnisse

**Tabelle 2:** Beispiele und Vergleichsbeispiele.

| Komponenten | Einheit | B1 | B2 | B3 | VB1 | VB2 | VB3 |
|---|---|---|---|---|---|---|---|
| Polyamid 1 (Komponente A1) | Gew.-% | 97.49 | | | | | |

(fortgesetzt)

| Komponenten | Einheit | B1 | B2 | B3 | VB1 | VB2 | VB3 |
|---|---|---|---|---|---|---|---|
| Polyamid 2 (Komponente A1) | Gew.-% | | 97.49 | | 96.87 | | |
| Polyamid 3 (Komponente A1) | Gew.-% | | | 68.24 | | 96.87 | |
| Polyamid 4 | Gew.-% | | | | | | 97.49 |
| PA 12 (Komponente A2) | Gew.-% | | | 29.25 | | | |
| Gehalt von A1 in A | Gew.-% | 100 | 100 | 70 | 100 | 100 | 100 |
| Farbmittel 1 (Komponente B) | Gew.-% | 0.21 | 0.21 | 0.21 | | | 0.21 |
| Farbmittel 2 (Komponente B) | Gew.-% | | | | 0.48 | 0.48 | |
| Russ | Gew.-% | | | | 0.35 | 0.35 | |
| Stabilisator (Komponente C) | Gew.-% | 2.1 | 2.1 | 2.1 | 2.1 | 2.1 | 2.1 |
| Gleitmittel (Komponente D) | Gew.-% | 0.20 | 0.20 | 0.20 | 0.20 | 0.20 | 0.20 |
| **Eigenschaften** | | | | | | | |
| Zug-E-Modul | MPa | 2350 | 2260 | 1600 | 2280 | 1560 | 2710 |
| Bruchspannung | MPa | 57 | 56 | 51 | 57 | 49 | 88 |
| Bruchdehnung | % | 80 | 105 | 130 | 70 | 97 | 4.3 |
| Schlagzähigkeit | kJ/mm2 | o.B. | o.B. | o.B. | o.B. | o.B. | 50 |
| Kerbschlagzähigkeit | kJ/mm2 | 7.0 | 7.1 | 8.0 | 6.7 | 7.9 | 7.9 |
| Transmission 400-650 nm | % | < 1 | < 1 | < 1 | < 1 | < 1 | < 1 |
| Transmission 750-1200 nm | % | > 75 | > 75 | > 75 | < 1 | < 1 | > 75 |
| Glanz 60° | | 110 | 111 | 104 | 97 | 120 | 103 |
| Farbhelligkeit L* | | 25.8 | 25.7 | 25.9 | 26.9 | 26.8 | 26.0 |
| **Bewitterung ISO 4892-2:2013** | | | | | | | |
| Glanz 60° nach 1000 h | | 91 | 94 | 98 | 14 | 63 | 71 |
| Farbhelligkeitsdifferenz ∆L* nach 1000 h | | 2.6 | 2.5 | 1.8 | 13.0 | 3.2 | 2.7 |
| Farbabstand ∆E nach 1000 h | | 2.9 | 2.8 | 2.0 | 13.5 | 4.5 | 4.7 |

Tabelle 2 kann entnommen werden, dass die erfindungsgemäss schwarz eingefärbten Polyamid-Formmassen gemäss der Beispiele B1 bis B3 neben einem hervorragenden Glanz eine ausreichende dunkle Einfärbung besitzen. Die zusätzlich mit Russ eingefärben Vergleichsbeispiele VB1 und VB2 zeigen sogar eine leicht höhere Helligkeit. Im Gegensatz zu den Vergleichsbeispielen bleibt der Glanz nach Bewitterung bei den erfindungsgemässen Beispielen B1 bis B3 weitgehend erhalten. Bei VB1 bis VB3 nimmt der Glanz nach 1000 Stunden im Bewitterungstest um 31 bis 85% gegenüber dem Ausgangswert ab. Ein Vergleich der Beispiele B1 und B2 mit dem Vergleichsbespiel VB3 zeigt klar auf, dass eine zu hohe Konzentration an aromatischen Struktureinheiten im transparenten Polyamid VB3 zu einer schlechteren Bewitterungsstabilität führt.

**Patentansprüche**

1. Polyamid-Formmasse enthaltend die folgenden Komponenten oder bevorzugt bestehend aus den folgenden Komponenten:

   85 bis 99.85 Gew.-% einer Komponente A, wobei die Komponente A besteht aus Polyamid A1 oder aus einer Mischung der Polyamide A1 und A2, wobei

   A1 mindestens ein amorphes oder mikrokristallines Polyamid mit mehr als 60 Mol% an Monomeren mit ausschliesslich aliphatischen Struktureinheiten, bezogen auf die Gesamtmenge an Monomeren, ist; und A2 mindestens ein acyclisch aliphatisches Polyamid ist; und

wobei die Summe der Komponenten A1 und A2 100 Gew.-% der Komponente A ergibt;
0.05 bis 2.0 Gew.-% mindestens eines Farbmittels B;
0.10 bis 3.0 Gew.-% mindestens eines Stabilisators C;
0 bis 10 Gew.-% Zusatzstoffe D, verschieden von A, B und C;
wobei sich die Gewichtsanteile der Komponenten A bis D auf 100 Gew.-% ergänzen; wobei die Polyamid-Formmasse weder Russ noch Nigrosin umfasst;
wobei die Farbhelligkeit L*, bestimmt gemäss DIN EN ISO 11664-4:2020 im CIELAB-Farbraum an einer Platte der Dimension 60 x 60 x 2 mm, höchstens 32 ist;
und wobei die Polyamide A1 eine Transparenz von mindestens 88% und einen Haze von höchstens 5%, jeweils bestimmt gemäss ASTM-D1003-21 an einer Platte der Dimension 60 x 60 x 2 mm, aufweisen.

2. Polyamid-Formmasse nach Anspruch 1, **dadurch gekennzeichnet, dass** die Transmission im Wellenlängenbereich von 750 bis 1200 nm wenigstens 50%, bevorzugt wenigstens 60% und besonders bevorzugt wenigstens 70% beträgt und die Transmission im Wellenlängenbereich von 400 bis 650 nm höchstens 10%, höchstens 5% und besonders bevorzugt höchstens 3% beträgt, jeweils bestimmt mit einem UV/VIS/NIR-Spektrometer gemäss DIN EN ISO 13468-2:2006 an einer Platte der Dimension 60 x 60 x 2 mm.

3. Polyamid-Formmasse nach einem der vorhergehenden Ansprüche, **dadurch gekennzeichnet, dass** das mindestens eine Polyamide A1 aus folgenden Monomeren aufgebaut sind:

a-A1    15 bis 100 Mol-% an cycloaliphatischen Diaminen, bezogen auf die Gesamtmenge an Diaminen;
b-A1    0 bis 85 Mol-% an offenkettigen, aliphatischen Diaminen, bezogen auf die Gesamtmenge an Diaminen;
c-A1    20 bis 100 Mol-% an aliphatischen Dicarbonsäuren, bezogen auf die Gesamtmenge an Dicarbonsäuren;
d-A1    0 bis 80 Mol-% an aromatischen Dicarbonsäuren, bezogen auf die Gesamtmenge an Dicarbonsäuren;
e-A1    0 bis 40 Mol-% an aliphatischen Lactamen und/oder aliphatischen Aminocarbonsäuren mit 6 bis 12 Kohlenstoffatomen, bezogen auf die Gesamtmenge der Monomere a-A1 bis e-A1;

wobei die Summe der Diamine a-A1 und b-A1 100 Mol-% ergibt und
wobei die Summe der Dicarbonsäuren c-A1 und d-A1 100 Mol-% ergibt.

4. Polyamid-Formmasse nach einem der vorhergehenden Ansprüche, **dadurch gekennzeichnet, dass** das mindestens eine Polyamid A1 wenigstens 63 Mol-%, bevorzugt wenigstens 68 Mol-%, insbesondere mindestens 70 Mol-%, besonders bevorzugt im Bereich von 60 bis 100 Mol-% oder 63 bis 100 Mol-% oder 68 bis 100 Mol-% an Monomeren mit ausschliesslich aliphatischen Struktureinheiten, bezogen auf die Gesamtmenge an Monomeren, enthält.

5. Polyamid-Formmasse nach einem der vorhergehenden Ansprüche, **dadurch gekennzeichnet, dass** das wenigstens eine Polyamid A2 ausgewählt ist aus der Gruppe bestehend aus PA 11, PA 12, PA 1010, PA 1016, PA 610, PA 612, PA 614, PA 616, PA 66, PA 6, PA 6/12 sowie Mischungen davon.

6. Polyamid-Formmasse nach einem der vorhergehenden Ansprüche, **dadurch gekennzeichnet, dass** die Komponente A aus

50 bis 95 Gew.-% Polyamid A1 und 5 bis 50 Gew.-% Polyamid A2 besteht; oder
60 bis 85 Gew.-% Polyamid A1 und 15 bis 40 Gew.-% Polyamid A2 besteht; oder
65 bis 80 Gew.-% Polyamid A1 und 20 bis 35 Gew.-% Polyamid A2 besteht, wobei die Summe der Komponenten A1 und A2 100 Gew.-% der Komponente A ergibt.

7. Polyamid-Formmasse nach einem der vorhergehenden Ansprüche, **dadurch gekennzeichnet, dass**

das cycloaliphatische Diamin a-A1 ausgewählt ist aus der Gruppe bestehend aus Bis-(4-amino-3-methylcyclohexyl)methan, Bis-(4-aminocyclohexyl)methan, Bis-(4-amino-3,5-dimethylcyclohexyl)methan, 1,3-Bis-(aminomethyl)cyclohexan, 1,4-Bis-(aminomethyl)cyclohexan und Mischungen daraus;
und/oder

das Diamin b-A1 ausgewählt ist aus der Gruppe bestehend aus Hexandiamin, insbesondere 1,6-Hexandiamin, 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus; und/oder

die aliphatische Dicarbonsäure c-A1 ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus; und/oder

die aromatische Dicarbonsäure d-A1 ausgewählt ist aus der Gruppe bestehend aus Terephthalsäure, Isophthalsäure, 1,5-Naphthalindicarbonsäure und 2,6-Naphthalindicarbonsäure und Mischungen davon; und/oder

das Lactam und/oder die $\alpha,\omega$-Aminocarbonsäuren e-A1 ausgewählt ist aus der Gruppe bestehend aus Caprolactam (CL), $\alpha,\omega$-Aminocapronsäure, $\alpha,\omega$-Aminoundecansäure (AUA), Laurinlactam (LL) und $\alpha,\omega$-Aminododecansäure (ADA), und Mischungen daraus.

8. Polyamid-Formmasse nach einem der vorhergehenden Ansprüche, **dadurch gekennzeichnet, dass** das Polyamid A1 ausgewählt ist aus der Gruppe bestehend aus PA MACM9, PA MACM10, PA MACM11, PA MACM12, PA MACM13, PA MACM14, PA MACM15, PA MACM16, PA MACM17, PA MACM18, PA MACM36, PA PACM9, PA PACM10, PA PACM11, PA PACM12, PA PACM13, PA PACM14, PACM15, PA PACM16, PACM17, PA PACM18, PA PACM36, PA TMDC9, PA TMDC10, PA TMDC11, PA TMDC12, PA TMDC13, PA TMDC14, PA TMDC15, PA TMDC16, PA TMDC17, PA TMDC18, PA TMDC36, PA MACM10/1010, PA MACM10/PACM10, PA MACM12/1012, PA MACM14/1014, PA PACM10/1010, PA PACM12/1012, PA PACM14/1014, PA MACM12/PACM12, PA MACM14/PACM14, PA MACMI/12, PA MACMI/1012, PA MACMT/12, PA MACMI/MACMT/12, PA MACMI/MACMT/MACM12, PA 6I/6T/MACMI/MACMT/12, PA 6I/612/MACMI/MACM12, PA 6T/612/ MACMT/MACM12, PA 6I/6T/612/MACMI/MACMT/MACM12, PA 6I/6T/MACMI/ MACMT/PACMI/PACMT/12, PA MACMI/MACMT/MACM36, PA MACMI/MACM36, PA MACMT/MACM36, PA PACMI/12, PA PACMT/12, PA PACMT/6, PA PACMI/6, und Mischungen hiervon.

9. Polyamid-Formmasse nach einem der vorhergehenden Ansprüche, **dadurch gekennzeichnet, dass** das Farbmittel B ausgewählt ist aus der Gruppe bestehend aus Pyrazolon-, Perinon- und Anthrachinon-, Methin-, Azo- und Cumarin-Farbstoffen und/oder metallhaltigen Pigmenten, wie anorganischen Pigmenten und die Metallkomplexen von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmitteln.

10. Polyamid-Formmasse nach einem der vorhergehenden Ansprüche, **dadurch gekennzeichnet, dass** das mindestens eine Farbmittel B wenigstens eines der nachfolgend genannten Farbmitteln enthält oder bevorzugt ausgewählt ist aus der Gruppe der nachfolgend genannten Farbmitteln: Solvent Green 3, Solvent Green 28, Solvent Red 52, Solvent Red 111, Solvent Red 135, Solvent Red 169, Solvent Red 179, Solvent Red 207, Disperse Red 22, Vat Red 41, Solvent Orange 60, Solvent Orange 63, Solvent Violet 13, Solvent Violet 14, Solvent Violet 50, Disperse Blue 73, Solvent Blue 97, Solvent Blue 101, Solvent Blue 104, Solvent Blue 138, Disperse Yellow 160, Solvent Yellow 84, Solvent Yellow 93, Solvent Yellow 98, Solvent Yellow 163, Solvent Yellow 160: 1, sowie Mischungen davon.

11. Polyamid-Formmasse nach einem der vorhergehenden Ansprüche, **dadurch gekennzeichnet, dass** das mindestens eine Farbmittel B ausgewählt ist

als Farbstoff-Mischung aus Solvent Green 3 und Solvent Red 179; oder Solvent Red 52 und Solvent Blue 97; oder Solvent Green 3, Solvent Blue 97 und Solvent Red 179; oder
als Farbstoff-Mischung B, bestehend aus den Komponenten

| | | |
|---|---|---|
| B1 | 20 - 40 Gew.-% | Solvent Green 3; |
| B2 | 10 - 30 Gew.-% | Solvent Blue 97; |
| B3 | 40 - 70 Gew.-% | Solvent Red 179; |

wobei die Summe B1 bis B3 100 Gew.-% des Farbmittels B ergibt.

12. Polyamid-Formmasse nach einem der vorhergehenden Ansprüche, **dadurch gekennzeichnet, dass** der mindestens eine Stabilisator C ausgewählt ist aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern.

13. Polyamid-Formmasse nach einem der vorhergehenden Ansprüche, **dadurch gekennzeichnet, dass** der mindestens eine Zusatzstoff D ausgewählt ist aus der Gruppe bestehend aus Weichmachern, Schlagzähmodifikatoren, Gleitmitteln, Entformungsmitteln, Kondensationskatalysatoren, Kettenreglern, insbesondere monofunktionelle Carbonsäuren oder Aminen, Entschäumern, Antiblockmitteln, natürlichen Schichtsilikaten, synthetischen Schichtsilikaten, nanoskaligen Füllstoffen und Mischungen davon.

14. Formkörper enthaltend eine Polyamid-Formmasse oder bevorzugt bestehend aus einer Polyamid-Formmasse nach einem der Ansprüche 1 bis 13, insbesondere ausgewählt aus der Gruppe bestehend aus Innen- und Aussenteile für Automobile, Motorräder, Campingfahrzeugen oder Wohnwagen, Gebäude- und Fassadenteile, dekorative Strukturrahmen, Bedienungsknöpfen oder -hebeln, Abdeckungen, Sichtflächen, hinterleuchtete Komponenten, Blenden von Mobiltelefonen, Tablets, Gehäuse von elektronischen Geräten, Dekorteilen in Fahrzeugen, Haushaltsgeräten, Behältern, Fahrzeugschlüsseln, Freizeit- und Outdoorartikeln.

15. Verwendung eines Farbmittels, das weder Russ noch Nigrosin umfasst, mit einer hohen Absorption im Wellenlängenbereich zwischen 400 und 650 nm und einer niedrigen Absorption im Wellenlängenbereich zwischen 750 und 1200 nm zur Verbesserung der Witterungsbeständigkeit von Polyamid-Formmassen auf Basis transparenter Polyamide mit mehr als 60 Mol-% an Monomeren mit ausschliesslich aliphatischen Struktureinheiten, bezogen auf die Gesamtmenge der Monomeren, die eine Farbhelligkeit L*, bestimmt gemäss DIN EN ISO 11664-4:2020 im CIELAB-Farbraum an einer Platte der Dimension 60 x 60 x 2 mm, von höchstens 32 aufweist.

**Europäisches Patentamt**
**European Patent Office**
**Office européen des brevets**

## EUROPÄISCHER RECHERCHENBERICHT

**Nummer der Anmeldung**

**EP 22 18 4261**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 109 401 298 A (SHANGHAI KUMHO SUNNY PLASTICS CO LTD; SHANGHAI KUMHO SUNNY PLASTICS) 1. März 2019 (2019-03-01) | 1-9, 12-14 | INV. C08K5/00 C08K5/098 |
| A | * Seite 6; Beispiel 7 * <br> * Ansprüche 1-2 * <br> ----- | 10,11,15 | C08L77/06 |
| X | JP 2008 266434 A (MITSUBISHI ENG PLASTICS CORP) 6. November 2008 (2008-11-06) | 1-7,9, 12-14 | |
| A | * Seite 21; Beispiel 2 * <br> * Absatz [0017] * <br> ----- | 8,10,11 | |

**RECHERCHIERTE SACHGEBIETE (IPC)**

C08K
C08L

Der vorliegende Recherchenbericht wurde für alle Patentansprüche erstellt

| Recherchenort | Abschlußdatum der Recherche | Prüfer |
|---|---|---|
| München | 24. November 2022 | Wohnhaas, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 18 4261

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-11-2022

| Im Recherchenbericht angeführtes Patentdokument | Datum der Veröffentlichung | Mitglied(er) der Patentfamilie | Datum der Veröffentlichung |
|---|---|---|---|
| CN 109401298 A | 01-03-2019 | KEINE | |
| JP 2008266434 A | 06-11-2008 | JP 5384801 B2 | 08-01-2014 |
| | | JP 2008266434 A | 06-11-2008 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5945469 A
- US 6265472 B1
- JP 2008266434 A
- WO 2017144276 A1
- WO 2012080398 A2